# EUROPÄISCHE PATENTSCHRIFT

(11) **EP 3 433 528 B1**
(45) Veröffentlichungstag und Bekanntmachung des Hinweises auf die Patenterteilung: **03.08.2022**
(21) Anmeldenummer: 17721321.2
(22) Anmeldetag: 23.03.2017
(51) Int. Cl.: F16L 41/00, F16L 55/26

(54) **VERFAHREN ZUM AUTOMATISCHEN FREILEGEN EINER ABZWEIGUNG IN EINEM LEITUNGSSYSTEM**
METHOD FOR AUTOMATICALLY EXPOSING A BRANCH-OFF POINT IN A LINE SYSTEM
PROCÉDÉ POUR DÉGAGER AUTOMATIQUEMENT UNE RAMIFICATION DANS UN RÉSEAU DE CANALISATIONS

(30) Priorität: 24.03.2016 DE 102016105641
(43) Veröffentlichungstag der Anmeldung: 30.01.2019
(73) Patentinhaber: Pipetronics GmbH&Co. KG, 76865 Rohrbach (DE)
(72) Erfinder: WIND, Herbert, 76857 Albersweiler (DE); NOLL, Christian, 67117 Limburgerhof (DE)
(74) Vertreter: Dr. Langfinger & Partner
(86) Internationale Anmeldenummer: PCT/DE2017/100235
(87) Internationale Veröffentlichungsnummer: WO 2017/162241

(56) Entgegenhaltungen:
- WO-A1-90/15347
- DE-A1-102014 105 379
- GB-A- 2 092 493
- US-A1- 2006 074 525
- US-B1- 6 386 797
- US-B1- 8 170 715

## Beschreibung

Die vorliegende Erfindung betrifft ein Verfahren zum automatischen Freilegen einer Abzweigung in einem Leitungssystem

Zur Inspektion, Wartung und Sanierung von Leitungen, Kanalsystemen, und dergleichen werden oftmals Vorrichtungen in die Leitungen eingeführt, um die erforderlichen Messvorgänge und/oder mechanischen Sanierungsarbeiten auszuführen. Zur Messung der Ist-Situation einer Leitung weisen die Vorrichtungen meist Kamerasysteme auf, um den Zustand der Leitung zu visualisieren.

Wird ein Defekt oder eine Beschädigung erkannt, kann der entsprechende Abschnitt des Leitungssystems durch neue Abschnitte ersetzt werden. Dies ist jedoch in der Regel sehr aufwendig.

Alternativ sind Verfahren im Stand der Technik bekannt, bei denen zur Sanierung von Leitungssystemen, z.B. von Kanälen und ähnlichen Rohrsystemen, eine flexibler, mit einer mit härtbaren Harz getränkte aushärtbare Lage, die als Auskleidungsschlauch, auch als Liner bezeichnet, dient, in das Leitungssystem eingeführt wird. Nach dem Einführen wird der Auskleidungsschlauch aufgeweitet, so dass er sich eng an die Innenwand des Leitungssystems anschmiegt. Anschließend wird das Harz ausgehärtet.

Die Herstellung eines derartigen Auskleidungsschlauches ist beispielsweise in der WO 95/04646 beschrieben. Als härtbare Harze werden nach den bekannten Verfahren vorzugsweise ungesättigte Polyesterharze oder Vinylesterharze verwendet, die beispielsweise in Styrol und/oder einem Acrylester gelöst sein können.

Diese ungesättigten Polyester- oder Vinylester können thermisch (üblicherweise durch Peroxidkatalysatoren) oder mittels Strahlung, z. B. durch UV-Licht mit Photoinitiatoren wie beispielsweise in der EP-A 23623 beschrieben, ausgehärtet werden. Auch so genannte Kombinationshärtungen mit einem für die thermische Härtung verwendeten Peroxidinitiator in Kombination mit Photoinitiatoren sind möglich und haben sich insbesondere bei großen Wandstärken der Auskleidungsschläuche als vorteilhaft erwiesen. Ein Verfahren für eine derartige sogenannte Kombinationshärtung ist beispielsweise in der EP-A 1262708 beschrieben.

Ein strahlungshärtender Auskleidungsschlauch weist üblicherweise eine lichtundurchlässige äußere Schutzfolie, eine mindestens für bestimmte Wellenlängenbereiche elektromagnetischer Strahlung durchlässige Innenfolie sowie eine mit einem Harz getränkte aushärtbare Lage auf, die zwischen der Innenfolie und der Außenfolie angeordnet ist. Der Aussenfolienschlauch soll verhindern, dass das zur Imprägnierung verwendete Harz aus der aushärtbaren Lage austritt und in die Umwelt gelangt. Dies setzt eine gute Dichtigkeit und Anbindung des äußeren Folienschlauchs an die harzgetränkte aushärtbare Lage voraus.

Die Auskleidungsschläuche werden vor dem Aushärten in die zu sanierenden Leitungssystem eingeführt und mittels eines Fluids, i.d.R. Druckluft, aufgeblasen. Für ein Aufblasen des Auskleidungsschlauchs wird ein Öffnungsende des Auskleidungsschlauchs gemäß dem Stand der Technik mit Druckluft beaufschlagt und das gegenüberliegende Öffnungsende des Auskleidungsschlauchs mit einer Verschlussvorrichtung, einem sogenannten Packer, verschlossen. Diese Verschlussvorrichtung umfasst dabei einen Hohlzylinder und ein Abdeckelement, mit welchem der Hohlzylinder verschlossen werden kann.

In den Auskleidungsschlauch wird zum Aushärten desselben eine Aushärtevorrichtung eingeführt, die eine Strahlungsquelle aufweist, und die durch den Auskleidungsschlauch geführt wird, um mit der Strahlungsenergie die Aushärtung der aushärtbaren Lagen des Auskleidungsschlauchs zu aktivieren bzw. vorzunehmen. Dabei ist eine vollständige Aushärtung der Auskleidungsschläuche von großer Bedeutung, d.h. es muss eine bestimmte Menge Strahlungsenergie an jeden Punkt des Auskleidungsschlauchs in diesen eingebracht werden. Die Menge an Strahlungsenergie hängt dabei von der Leistungsabgabe der Strahlungsquellen sowie der Geschwindigkeit ab, mit der diese durch den Auskleidungsschlauch durchgeführt werden.

Werden solche Auskleidungsschläuche in die zu sanierende Leitung eingezogen, ist es erforderlich, die durch den Auskleidungsschlauch verschlossenen Abzweigungen nach Aushärten des Auskleidungsschlauchs wieder freizulegen. Hierzu muss die Position der Abzweigungen möglichst genau bekannt sein.

Zur messtechnischen Erfassung von Leitungen und insbesondere zur Bestimmung der Position von Abzweigungen werden üblicherweise Messvorrichtungen gemäß dem Stand der Technik vor dem Einziehen des Auskleidungsschlauchs in die Leitung eingeführt, wobei die Messvorrichtung entweder selbstständig oder mit Hilfe eines Kabels, insbesondere eines Kabels umfassend Kevlarfasern und/oder mindestens ein Zugseil, und/oder eines Zugseils durch eine zu sanierende Leitung bewegt wird.

Die Messevorrichtung gemäß dem Stand der Technik erfasst dabei, meist über optische Sensoren, insbesondere Kameraaufnahmen, die Position der Abzweigungen vor dem Einziehen des Auskleidungsschlauchs. Im Folgenden soll der Begriff Abzweigungen breit verstanden werden und Seiteneinläufe, auch als Rohreinläufe oder Rohrabzweigungen bezeichnet, umfassen. Wenn eine Abzweigung erkannt wird, wird zur Bestimmung der Position der Abzweigung in der Leitung entweder auf einen Drehzahlsensor, der die Anzahl der Umdrehung der Räder der Messvorrichtung zählt, dass Abmessen der Länge des zur Fortbewegung des Kabels bzw. Zugseils, oder ein von der Aushärtevorrichtung mitgeführten Maßbands zurückgegriffen.

Die Position der Abzweigung muss dabei jedoch nicht nur bezogen auf ihren Abstand zu einem oder beiden Öffnungsende der Leitung erfolgen, sondern auch in ihrer Winkellage erfasst werden. Hierfür kommen beispielsweise Drehwinkelsensoren oder Gravitationssensoren zum Einsatz.

Wenn die Position einer Abzweigung bekannt ist, muss diese nachfolgend mittels einer Freilegevorrichtung freigelegt werden. Dies erfolgt derzeit manuell, wobei das manuelle Verfahren ggf. durch die Verwendung von Abstandssensoren und dergleichen unterstützt wird. Problematisch bei dem manuellen Freilegen sind dabei mehrere Faktoren. Zum Einen ist die Steuerung der Freilegevorrichtungen für den Benutzer mit einem hohen Übungsaufwand verbunden. Es ist für einen ungeübten Benutzer praktisch unmöglich, eine gewünschte z.B. kreisförmige Aussparung zu erzeugen. Eine Freilegevorrichtung gemäß dem Stand der Technik ist üblicherweise ein fahrbare Vorrichtung mit einem Roboterarm, an dessen freien Ende ein Fräskopf angeordnet ist. Zum Freilegen der Abzweigung muss dabei nicht nur der Fräskopf am Ende des Roboterarms in allen drei Raumrichtungen gesteuert werden, aufgrund der Größe der zu erzeugenden Aussparungen muss dabei die Vorrichtung selbst vor der freizulegenden Abzweigung beim Freilegen gleichzeitig vor- und zurückgefahren werden. Dieses Koordinationen von Roboterarm und Position des Fräskopfs ist manuell sehr aufwändig.

Verkompliziert wird das Freilegen dabei auch dadurch, dass bei einer mit einem Auskleidungsschlauch sanierten Leitung der Benutzer immer eine Abzweigung freilegen muss, die durch den Auskleidungsschlauch verdeckt ist, und daher nicht für ihn sichtbar ist. Zusätzlich wird das Freilegen noch dadurch erschwert, dass die üblicherweise an der Freilegevorrichtung montierten Kamerasysteme zum Anzeigen des Arbeitsbereich des Fräskopfes seitlich an der Freilegevorrichtung angebracht sind, also immer eine perspektivische Verzerrung vorliegt. Eine z.B. kreisförmige Abzweigung freizulegen wird somit zusätzlich erschwert, da die besagte perspektivische Verzerrung durch den Benutzer intuitiv korrigiert werden muss.

Noch komplexer ist das Freilegen von schräg verlaufenden Zuläufen. Abzweigungen von Leitungssystemen liegen nicht ausschließlich rechtwinklig vor, sondern auch abgewinkelt, z.B. in einem Winkel von 45°. Hier muss ein ellipsenförmiger Ausschnitt des Auskleidungsschlauchs erzeugt werden, um eine solche Art von Abzweigung freizulegen. Eine solche elliptische Aussparung freihändig zu erzeugen, dabei die perspektivische Verzerrung der Kamerasysteme intuitiv auszugleichen, und einen Fräskopf in drei Raumrichtungen parallel zu der Positionen der Freilegevorrichtung als solche zu steuern, ist selbst für erfahrene Benutzer schwer präzise realisierbar.

Aus US2006/074525 A1 ist ein Verfahren zum automatischen Freilegen einer Abzweigung eines mit einem Auskleidungsschlauchs sanierten Leitungssystems bekannt, bei dem die Abzweigung anhand einer geometrischen Figur automatisch freigelegt wird. Vergleichbare Verfahren beschreiben DE 10 2014 105 379 A1, WO 90/15347 A1, US 8 170 715 A1, US 6 386 797 B1 und GB 2 092 493 A.

Nachteilig an den bekannten Verfahren und Vorrichtungen ist es daher, dass ein Freilegen einer Abzweigung für manuelle Bedienfehler sehr anfällig ist. Ein unpräzises Freilegen der Abzweigung kann dabei sehr leicht zur Beschädigung derselben führen, indem der zum Freilegen oftmals verwendete Fräskopf die Wandung der Abzweigung beschädigt, so dass anschließende zeit- und kostenaufwändige Reparaturarbeiten erfolgen müssen. Ein zweites Problem besteht darin, dass die Abzweigung ggf. nicht vollumfänglich freigelegt wird, so dass insbesondere im Falle eines unvollständigen Freilegens im unteren Bereich Stauungen und Verschlammungen von bzw. durch Flüssigkeiten auftreten können. Dies ist ebenfalls unerwünscht.

Daher liegt die Aufgabe der vorliegenden Erfindung darin, die Nachteile des Stands der Technik zu überwinden und insbesondere ein präzises Freilegen von Abzweigungen in mit Auskleidungsschläuchen sanierten Leitungen durch einen Benutzer zu ermöglichen.

Diese Aufgabe wird gelöst durch ein Verfahren gemäß Patentanspruch 1.

Durch ein erfindungsgemäßes Verfahren wird es ermöglicht, dass ein Benutzer eine freizulegende geometrische Form nach eigenen Wünschen eingibt und anschließend die eingegebene geometrische Form mittels der Freilegeeinrichtung der Freilegevorrichtung automatisch abgefahren und somit eine Öffnung in dem Auskleidungsschlauchs entsprechend der besagten Form erzeugt wird. Die im Stand der Technik auftretenden Probleme der komplexen manuellen Steuerung der Freilegevorrichtung, die schwierige Kompensation der perspektivischen Verzerrung sowie die Schwierigkeiten beim manuellen erzeugen komplexer freigelegter Bereiche werden somit erfindungsgemäß überwunden.

Unter einer geometrischen Form soll dabei erfindungsgemäß eine beliebige geometrische Form verstanden werden, beispielsweise eine einfache Gerade, ein Kurve, und dergleichen. Offensichtlicherweise ist eine geometrische Form dabei nicht durch ihre Komplexität beschränkt, sondern kann auch in Form eines Kreises, einer Ellipse, eines Rechtecks, eines n-Ecks, oder sonstiger komplexer Formen umfassend gerade und gekrümmte Abschnitte vorliegen.

Bevorzugt kann dabei gemäß einer Ausführungsform sein, dass die geometrische Form durch ihre äußeren Begrenzungen festgelegt ist und insbesondere eine geschlossene geometrische Form ausbildet, um direkt eine Öffnung in dem Auskleidungsschlauch erzeugen zu können. Alternativ kann vorgesehen sein, dass die geometrische Form offen ist, und nicht von der geometrischen Form umfasste freizulegenden Abschnitte manuelle freigelegt werden.

Das erfindungsgemäße Verfahren ermöglicht somit in neuartiger Art und Weise ein automatisches Freilegen einer Abzweigung in einer mit einem Auskleidungsschlauch sanierten Leitung.

Gemäß einer Ausführungsform der vorliegenden Erfindung kann dabei bevorzugt sein, dass das Verfahren weiterhin die folgenden Schritte umfasst, insbesondere parallel oder nachfolgend zu Schritt b):
d) Eingeben der geometrischen Form durch ein Auswählen der geometrischen Form aus einem in der Datenverarbeitungseinrichtung hinterlegten Formenschatz von geometrischen Figuren, insbesondere umfassend Kreise, Ellipsen, Rechtecke und/oder Vielecke, oder
e) freihändiges Zeichnen der geometrischen Form und Einlesen der besagten Form in die Datenverarbeitungseinrichtung mittels einer Bilderfassungseinrichtung, insbesondere einem Scanner oder einer Kameraeinrichtung, oder
f) freihändiges Zeichen der geometrischen Form mittels der Eingabeeinrichtung, insbesondere mittels eines Trackpacks oder eine Maus, wobei
insbesondere mindestens einer der Parameter aus einer Gruppe von Parametern umfassend eine Länge, eine Breite, eine Höhe und einen Durchmesser der geometrischen Form auswählbar ist oder ausgewählt wird.

Erfindungsgemäß kann eine geometrische Form in vielfältiger Art und Weise eingegeben oder ausgewählt werden. Es hat sich dabei als vorteilhaft erwiesen, wenn ein Formenschatz üblicher geometrischer Formen wie Kreise, Ellipsen, usw. bereits in einer Datenbank der Datenverarbeitungseinrichtung hinterlegt ist. Mittels eines solchen Formenschatzes können häufig vorkommende Geometrien von freizulegenden Abschnitten des Auskleidungsschlauchs mit einfachen Mitteln ausgewählt werden. Hierbei kann es auch vorgesehen sein, dass vor dem Einziehen des Auskleidungsschlauchs in die zu sanierende Leitung die Geometrie der anschließend durch den Auskleidungsschlauch verdeckten Abzweigung messtechnisch mittels einer Messvorrichtung erfasst wird und eine, insbesondere exakt, erfasste Geometrie der besagten Abzweigung in der Datenverarbeitungseinrichtung für ein nachfolgendes Auswählen in den Firmenschatz aufgenommen wird.

Alternativ kann es auch vorgesehen sein, dass ein Benutzer eine gewünscht Form, z.B. auf einem Blatt Papier, vorzeichnet und dieses dann abfotografiert, scannt oder anderweitig digitalisiert, wobei dann diese freihändig gezeichnete Form für das nachfolgende automatische Freilegen verwendet werden kann.

Es kann dabei auch bevorzugt sein, dass die ausgewählte geometrische Form aus dem Formenschatz oder die digitalisierte gezeichnete geometrische Form mittels "drag and drop" auf auf eine auf einer Anzeigeeinrichtung angezeigte Kameraaufnahme der Freilegevorrichtung des freizulegenden Abschnitts des Auskleidungsschlauchs gezogen werden kann und insbesondere dort anschließend an der gewünschten Stelle positioniert werden kann.

Auch kann es alternativ vorgesehen sein, dass der Benutzer direkt mittels einer Eingabeeinrichtung, beispielsweise einer Maus oder einem Trackpad, die gewünschte geometrische Form zeichnet. Dabei kann es insbesondere vorteilhaft sein, wenn ein solches Zeichnen direkt auf einer auf einer Anzeigeeinrichtung angezeigte Kameraaufnahme der Freilegevorrichtung des freizulegenden Abschnitts des Auskleidungsschlauchs erfolgt, so dass der Benutzer ähnlich einer "argumented reality" - Lösung das spätere automatisierte Freilegen intuitiv festlegen kann.

In allen drei Varianten ist es dabei vorteilhaft, wenn nach festlegen der geometrischen Form deren Breite, Länge, Durchmesser, etc. durch Eingabe entsprechender Parameter präzisiert werden kann.

Auch kann es bevorzugt sein, dass das erfindungsgemäße Verfahren weiterhin die folgenden Schritte umfasst, insbesondere parallel oder nachfolgend zu Schritt b):
g) Eingeben einer Position der geometrischen Form mittels der Eingabeeinrichtung relativ zu der Innenwandung des Auskleidungsschlauchs, insbesondere einer Winkellage der geometrischen Form bezogen auf einen Mittelpunkt des Radius des Auskleidungsschlauchs und/oder einen Abstand bezogen auf den tiefsten Punkt des Auskleidungsschlauchs, und/oder
h) Erfassen der Position des freien Endes der Freilegeeinrichtung und automatisches Anordnen der geometrischen Form beginnend bei der erfassten Position des freien Endes der Freilegeeinrichtung, und
i) nachfolgendes optionales Drehen, Rotieren, Neigen und/oder Verschieben der geometrischen Form mittels der Eingabeeinrichtung.

Um ein möglichst intuitives festlegen der Position des freizulegenden Abschnitts zu ermöglichen kann es vorteilhaft sein, dass die Position der geometrischen Form durch die Eingabe von Parametern erfolgen kann. Dies kann auch mittels "drag and drop" erfolgen. Es kann dabei vorgesehen sein kann, dass dem Benutzer auf einer Anzeigeeinrichtung eine Kameraaufnahme des freizulegenden Abschnitts des Auskleidungsschlauchs angezeigt wird, die mit der geometrischen Form überlagert wird, wobei zusätzliche Informationen wie Abstände der geometrischen Form von beispielsweise dem Bodenbereich des Auskleidungsschlauchs, Winkellagen, etc. zusätzlich angezeigt werden können. Dabei können auch sogenannte Positionierhilfen zum Einsatz kommen, in dem die erfindungsgemäße geometrische Form direkt an der Innenwand des Auskleidungsschlauchs optional "anhaftet" und sich an diese schmiegt, ohne dass der Benutzer ein entsprechende Eingabe vornehmen muss. Dies erleichtert die Positionierung der geometrischen Form zusätzlich.

Auch kann es vorgesehen sein, dass die geometrische Position an der erfassten Position der Fräskopfes der Freilegeeinrichtung automatisch angeordnet ist. Dies ist insbesondere dann vorteilhaft, wenn der Fräskopf zunächst manuell von einem Benutzer an die gewünschte Position gefahren wird und anschließend das automatische Freilegen erfolgen soll. In diesem Fall sind die einzugebenden Daten zur Positionierung der geometrischen Form weiter minimiert, da ein Eckpunkt der Positionierung durch die Position der Freilegeeinrichtung vorgegeben ist.

Des weiteren kann es vorgesehen sein, dass die Freilegevorrichtung in Form eines mobilen Roboters mit einem Fahrwerk ausgebildet ist und insbesondere eine Antriebseinrichtung umfasst und/oder mittels eines Kabels, insbesondere eines Kabels umfassend Kevlarfasern und/oder mindestens ein Zugseil, und/oder eines Zugseils und einer externen mit dem Kabel und/oder dem Zugseil verbundenen Antriebseinrichtung bewegt werden kann.

Dabei kann es gemäß einer Ausführungsform des erfindungsgemäßen Verfahrens auch vorteilhaft sein, dass die Datenverarbeitungseinrichtung ausgelegt und eingerichtet ist, um die Position der der Freilegevorrichtung in dem Auskleidungsschlauch zu steuern oder zu regeln, insbesondere auch während des Freilegens der Abzweigung.

Auch kann bevorzugt sein, dass die Freilegeeinrichtung der Freilegevorrichtung an einem beweglichen Ende eines in mindestens zwei, insbesondere drei Raumachsen beweglichen Roboterarms angeordnet ist, der insbesondere einklappbar ist und/oder mindestens ein teleskopartiges Armelement umfasst.

Es hat sich erfindungsgemäß als vorteilhaft erwiesen, wenn die Freilegevorrichtung in Form eines Freilegeroboters ausgebildet ist. Dieser kann dann mittels der Datenverarbeitungseinrichtung automatisch positioniert werden, um die vorgesehene automatische Freilegung der geometrischen Form vorzunehmen. Dafür kann es insbesondere auch vorteilhaft sein, wenn die Freilegevorrichtung einen beweglichen Roboterarm umfasst, an dessen freien Ende der Fräskopf angeordnet ist.

Auch kann vorgesehen sein, dass das erfindungsgemäße Verfahren weiterhin die folgenden Schritte umfasst, insbesondere vor Schritt b):
j) manuelles oder automatisches Freilegen eines Teilstücks der Abzweigung, insbesondere beabstandet vom Rand der Abzweigung, bevorzugt im Bereich des Mittelpunkts der Abzweigung, mittels einer Freilegeeinrichtung; und
k) manuelles oder automatisches Freilegen eines länglichen Abschnitts beginnend von dem ersten freigelegten Teilstück in Richtung einer Innenwandung der Abzweigung, insbesondere nach Unten gerichtet.

Es kann sich als vorteilhaft erweisen, dass zunächst ein erster Abschnitt der Abzweigung manuell freigelegt wird. Dabei kann insbesondere vorgesehen sein, dass eine erste Aussparung beabstandet von der vermuteten Innenwandung der Abzweigung, vorzugsweise im Bereich der Mitte derselben erfolgt. Ausgehend von dieser ersten Aussparung kann nachfolgend die Freilegeeinrichtung manuell zum Rand der Abzweigung bewegt werden. Ist dieser erreicht, kann anschließend das automatische Freilegen gestartet werden.

Auch kann es vorteilhaft sein, dass das erfindungsgemäße Verfahren weiterhin die folgenden Schritte umfasst, insbesondere vor Schritt a):
l) Erfassen einer Position einer Abzweigung vor Einziehen eines Auskleidungsschlauch in die zu sanierende Leitung, insbesondere mittels einer Messvorrichtung, und Speichern der Position in der Datenverarbeitungseinrichtung, oder
m) Eingeben der Position einer Abzweigung in die Datenverarbeitungseinrichtung, und
n) anschließendes manuelles oder automatisches Bewegen der Freilegevorrichtung zu der in der Datenverarbeitungseinrichtung gespeicherten Position der Abzweigung.

Es kann gemäß einer Ausführungsform der vorliegenden Erfindung vorteilhaft sein, dass zunächst ein Erfassen der Position und der Geometrie der freizulegenden Abzweigung mittels einer Messvorrichtung stattfindet. Dies ist insbesondere vorteilhaft, da die eingezeichnete Position der Abzweigung nicht mit der real vorliegenden Position exakt übereinstimmen muss. Zudem kann die äußere Form der Abzweigung durch Risse und Abplatzungen von der bekannten Form abweichen. Bevorzugt kann dabei erfindungsgemäß eine dreidimensionales Erfassen der Abzweigung sowie optional des Randbereichs der Abzweigung erfolgen, um so die Position und Form der freizulegenden Abmessung für das nach dem Einziehen des Auskleidungsschlauchs erforderliche Freilegen derselben in der Datenverarbeitungseinrichtung zu speichern.

Alternativ kann es gemäß einer Ausführungsform der vorliegenden Erfindung vorteilhaft sein, dass die Position der Abzweigung eingegeben wird.

Des weiteren kann es bevorzugt sein, dass das automatisierte Freilegen abschnittsweise erfolgt, und die Länge der Abschnitte durch den Benutzer einstellbar ist, vorzugsweise in Form von kreissegmentförmigen Abschnitten, wobei insbesondere nach jedem der Abschnitte eine manuelle Freigabe des nachfolgenden Abschnitts erfolgt.

Ein solches abschnittsweises Freilegen der Abzweigung weist den Vorteil auf, dass nach bestimmten Abschnitten eine Kontrolle des Freilegevorgangs erfolgen kann, in dem das automatisierte Freilegen nicht kontinuierlich stattfindet.

Schließlich kann vorgesehen sein, dass das automatisierte Freilegen von manuellen Eingaben des Benutzers zur Steuerung der Freilegevorrichtung mittels der Eingabeeinrichtung überlagert erfolgen kann, so dass abschnittsweise ein manuelles Freilegen erfolgt, wobei nach Beendigung des manuellen Eingreifens das Freilegen entlang der vorgegeben geometrischen Form automatisch fortgesetzt wird.

Ein solches überlagertes manuelles Freilegen kann zum einfachen Korrigieren des Freilegevorgangs führen, sofern der Benutzer solche für notwendig hält.

Weitere Merkmale und Vorteile der Erfindung ergeben sich aus der nachfolgenden Beschreibung, in der ein Ausführungsbeispiel der Erfindung anhand einer schematischen Zeichnung beispielhaft erläutert wird, ohne dadurch die Erfindung zu beschränken.

Dabei zeigt:

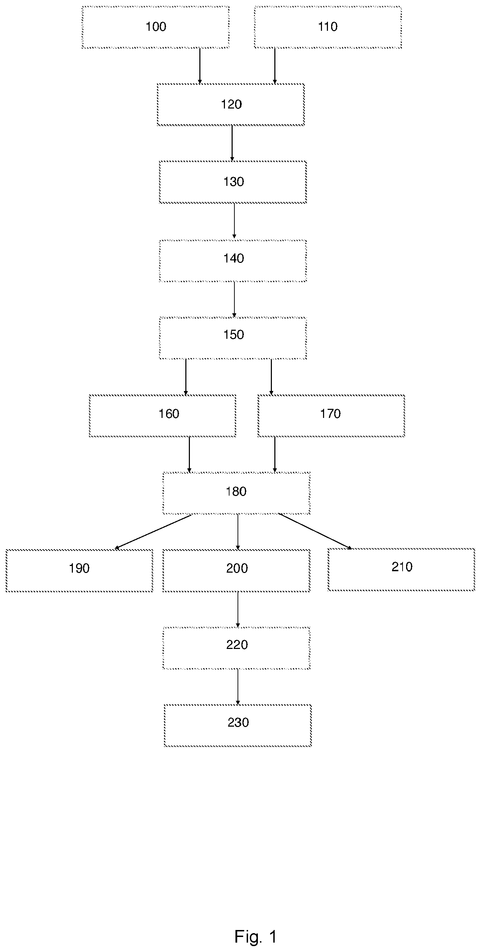

Figur 1: eine schematisches Ablaufdiagramm eines Ausführungsbeispiels eines erfindungsgemäßen Verfahrens.

Nachfolgend wird eine Ausführungsform eines erfindungsgemäßen Verfahrens beschrieben. In einem ersten optionalen Verfahrensschritt 100 kann zunächst ein Erfassen einer Position einer Abzweigung vor dem Einziehen eines Auskleidungsschlauch in die zu sanierende Leitung erfolgen, wobei die erfasste Position insbesondere mittels einer Messvorrichtung erfasst und anschließend in einer Datenverarbeitungseinrichtung gespeichert wird. Alternativ kann die Position der Abzweigung in die Datenverarbeitungseinrichtung vom Benutzer eingegeben werde.

In dem nächsten Verfahrensschritt 120 wird eine Freilegevorrichtung bereitgestellt und anschließend erfolgt ein manuelles oder automatisches Bewegen der Freilegevorrichtung zu der in der Datenverarbeitungseinrichtung gespeicherten Position der Abzweigung in einem Verfahrensschritt 130.

Erneut optional kann nun in einem Verfahrensschritt 140 ein manuelles oder automatisches Freilegen eines Teilstücks der Abzweigung, insbesondere beabstandet vom Rand der Abzweigung, bevorzugt im Bereich des Mittelpunkts der Abzweigung, mittels einer Freilegeeinrichtung der Freilegevorrichtung erfolgen. An dieses kann sich optional ein manuelles oder automatisches Freilegen eines länglichen Abschnitts beginnend von dem ersten freigelegten Teilstück in Richtung einer Innenwandung der Abzweigung, insbesondere nach Unten gerichtet, anschließen, siehe Verfahrensschritt 150.

In einem Schritt 160 wird nunmehr eine Position einer geometrischen Form mittels einer Eingabeeinrichtung relativ zu der Innenwandung des Auskleidungsschlauchs eingegeben oder es wird in ein Verfahrensschritt 170 die Position des freien Endes der Freilegeeinrichtung erfasst und die geometrischen Form beginnend bei der erfassten Position des freien Endes der Freilegeeinrichtung angeordnet. Nachfolgend erfolgt in einem Verfahrensschritt 180 optional ein Drehen, Rotieren, Neigen und/oder Verschieben der geometrischen Form mittels der Eingabeeinrichtung.

Vor oder nach den Schritten 160 bis 180 erfolgt in einem Schritt 190 entweder ein Eingeben der freizulegenden geometrischen Form durch ein Auswählen der geometrischen Form aus einem in der Datenverarbeitungseinrichtung hinterlegten Formenschatz von geometrischen Figuren, oder in einem Verfahrensschritt 200 ein freihändiges Zeichnen der geometrischen Form und Einlesen der besagten Form in die Datenverarbeitungseinrichtung mittels einer Bilderfassungseinrichtung, oder in einem Verfahrensschritt 210 ein freihändiges Zeichen der geometrischen Form mittels der Eingabeeinrichtung, insbesondere mittels eines Trackpacks oder eine Maus, gefolgt jeweils von einem optionalen auswählen von mindestens einem Parameter der geometrischen Form, wie beispielsweise eine Länge, eine Breite, eine Höhe und einen Durchmesser der geometrischen Form, in Schritt 220.

Abschließend wird dann ein Freilegen der Abzweigung mittels eines durch die Datenverarbeitungseinrichtung gesteuerten automatischen Ausfräsens von Abschnitten des Auskleidungsschlauchs entlang der eingegeben geometrischen Form mit einer Freilegeeinrichtung der Freilegevorrichtung in einem Verfahrensschritt 230 durchgeführt.

Die in der voranstehenden Beschreibung uns den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

Länge, eine Breite, eine Höhe und einen Durchmesser der geometrischen Form, in Schritt 220.

Abschließend wird dann ein Freilegen der Abzweigung mittels eines durch die Datenverarbeitungseinrichtung gesteuerten automatischen Ausfräsens von Abschnitten des Auskleidungsschlauchs entlang der eingegeben geometrischen Form mit einer Freilegeeinrichtung der Freilegevorrichtung in einem Verfahrensschritt 230 durchgeführt.

## Patentansprüche

1. Verfahren zum automatischen Freilegen einer Abzweigung eines mit einem Auskleidungsschlauch sanierten Leitungssystems, umfassend die folgenden Schritte, insbesondere in dieser Reihenfolge:
a) Bereitstellen einer Freilegevorrichtung, umfassend eine Datenverarbeitungseinrichtung, in der sanierten Leitung und Anordnen der Freilegevorrichtung vor der freizulegenden Abzweigung;
b) Eingeben einer freizulegenden geometrischen Form mittels einer Eingabeeinrichtung;
c) Freilegen der Abzweigung mittels eines durch die Datenverarbeitungseinrichtung gesteuerten automatischen Ausfräsens von Abschnitten des Auskleidungsschlauchs entlang der eingegeben geometrischen Form mit einer Freilegeeinrichtung der Freilegevorrichtung,
weiterhin umfassend die folgenden Schritte, insbesondere parallel oder nachfolgend zu Schritt b):
d) Eingeben der geometrischen Form durch ein Auswählen der geometrischen Form aus einem in der Datenverarbeitungseinrichtung hinterlegten Formenschatz von geometrischen Figuren, insbesondere umfassend Kreise, Ellipsen, Rechtecke und/oder Vielecke, oder
e) freihändiges Zeichnen der geometrischen Form und Einlesen der besagten Form in die Datenverarbeitungseinrichtung mittels einer Bilderfassungseinrichtung, insbesondere einem Scanner oder einer Kameraeinrichtung, oder
f) freihändiges Zeichen der geometrischen Form mittels der Eingabeeinrichtung, insbesondere mittels eines Trackpacks oder eine Maus, wobei
insbesondere mindestens einer der Parameter aus einer Gruppe von Parametern umfassend eine Länge, eine Breite, eine Höhe und einen Durchmesser der geometrischen Form auswählbar ist oder ausgewählt wird,
weiterhin umfassend die folgenden Schritte, insbesondere parallel oder nachfolgend zu Schritt b):
g) Eingeben einer Position der geometrischen Form mittels der Eingabeeinrichtung relativ zu der Innenwandung des Auskleidungsschlauchs, insbesondere einer Winkellage der geometrischen Form bezogen auf einen Mittelpunkt des Radius des Auskleidungsschlauchs und/oder einen Abstand bezogen auf den tiefsten Punkt des Auskleidungsschlauchs, und/oder
h) Erfassen der Position des freien Endes der Freilegeeinrichtung und automatisches Anordnen der geometrischen Form beginnend bei der erfassten Position des freien Endes der Freilegeeinrichtung, und
i) nachfolgendes optionales Drehen, Rotieren, Neigen und/oder Verschieben der geometrischen Form mittels der Eingabeeinrichtung.

2. Verfahren nach einem der vorangehenden Ansprüche, **dadurch gekennzeichnet, dass**
die Freilegevorrichtung in Form eines mobilen Roboters mit einem Fahrwerk ausgebildet ist und insbesondere eine Antriebseinrichtung umfasst und/oder mittels eines Kabels, insbesondere eines Kabels umfassend Kevlarfasern und/oder mindestens ein Zugseil, und/oder eines Zugseils und einer externen mit dem Kabel und/oder dem Zugseil verbundenen Antriebseinrichtung bewegt werden kann.

3. Verfahren nach Anspruch 4, **dadurch gekennzeichnet, dass** die Datenverarbeitungseinrichtung ausgelegt und eingerichtet ist, um die Position der der Freilegevorrichtung in dem Auskleidungsschlauch zu steuern oder zu regeln, insbesondere auch während des Freilegens der Abzweigung.

4. Verfahren nach einem der vorangehenden Ansprüche, **dadurch gekennzeichnet, dass**
die Freilegeeinrichtung der Freilegevorrichtung an einem beweglichen Ende eines in mindestens zwei, insbesondere drei Raumachsen beweglichen Roboterarms angeordnet ist, der insbesondere einklappbar ist und/oder mindestens ein teleskopartiges Armelement umfasst.

5. Verfahren nach einem der vorangehenden Ansprüche, weiterhin umfassend die folgenden Schritte, insbesondere vor Schritt b):
j) manuelles oder automatisches Freilegen eines Teilstücks der Abzweigung, insbesondere beabstandet vom Rand der Abzweigung, bevorzugt im Bereich des Mittelpunkts der Abzweigung, mittels einer Freilegeeinrichtung; und
k) manuelles oder automatisches Freilegen eines länglichen Abschnitts beginnend von dem ersten freigelegten Teilstück in Richtung einer Innenwandung der Abzweigung, insbesondere nach Unten gerichtet.

6. Verfahren nach einem der vorangehenden Ansprüche, weiterhin umfassend die folgenden Schritte, insbesondere vor Schritt a):
l) Erfassen einer Position einer Abzweigung vor Einziehen eines Auskleidungsschlauch in die zu sanierende Leitung, insbesondere mittels einer Messvorrichtung, und Speichern der Position in der Datenverarbeitungseinrichtung, oder
m) Eingeben der Position einer Abzweigung in die Datenverarbeitungseinrichtung, und
n) anschließendes manuelles oder automatisches Bewegen der Freilegevorrichtung zu der in der Datenverarbeitungseinrichtung gespeicherten Position der Abzweigung.

7. Verfahren nach einem der vorangehenden Ansprüche, **dadurch gekennzeichnet, dass**
das automatisierte Freilegen abschnittsweise erfolgt, und die Länge der Abschnitte durch den Benutzer einstellbar ist, vorzugsweise in Form von kreissegmentförmigen Abschnitten, wobei insbesondere nach jedem der Abschnitte eine manuelle Freigabe des nachfolgenden Abschnitts erfolgt.

8. Verfahren nach einem der vorangehenden Ansprüche, **dadurch gekennzeichnet, dass**
das automatisierte Freilegen von manuellen Eingaben des Benutzers zur Steuerung der Freilegevorrichtung mittels der Eingabeeinrichtung überlagert erfolgen kann, so dass abschnittsweise ein manuelles Freilegen erfolgt, wobei nach Beendigung des manuellen Eingreifens das Freilegen entlang der vorgegeben geometrischen Form automatisch fortgesetzt wird.

## Claims

1. Method for automatically exposing a branch-off point of a line system which has been rehabilitated with a lining sleeve, comprising the following steps, in particular in this order:
a) providing an exposing apparatus, comprising a data processing device, in the rehabilitated line and arranging the exposing apparatus in front of the branch-off point to be exposed;
b) inputting a geometrical shape to be exposed by means of an input device;
c) exposing the branch-off point by automatically milling out, in a manner controlled by the data processing device, sections of the lining sleeve along the input geometrical shape using an exposing device of the exposing apparatus,
also comprising the following steps, in particular in parallel with or after step b):
d) inputting the geometrical shape by selecting the geometrical shape from a range of geometrical figures stored in the data processing device, in particular comprising circles, ellipses, rectangles and/or polygons, or
e) drawing the geometrical shape in a freehand manner and reading said shape into the data processing device by means of an image capture device, in particular a scanner or a camera device, or
f) drawing the geometrical shape in a freehand manner by means of the input device, in particular by means of a trackpad or a mouse, wherein
in particular at least one of the parameters can be or is selected from a group of parameters comprising a length, a width, a height and a diameter of the geometrical shape,
also comprising the following steps, in particular in parallel with or after step b):
g) inputting a position of the geometrical shape relative to the inner wall of the lining sleeve by means of the input device, in particular an angular position of the geometrical shape based on a centre of the radius of the lining sleeve and/or a distance based on the deepest point of the lining sleeve, and/or
h) detecting the position of the free end of the exposing device and automatically arranging the geometrical shape starting with the detected position of the free end of the exposing device, and
i) subsequently optionally turning, rotating, inclining and/or shifting the geometrical shape by means of the input device.

2. Method according to one of the preceding claims, **characterized in that**
the exposing apparatus is in the form of a mobile robot having a chassis and, in particular, comprises a drive device and/or can be moved by means of a cable, in particular a cable comprising Kevlar fibres and/or at least one pulling rope, and/or a pulling rope and an external drive device connected to the cable and/or to the pulling rope.

3. Method according to Claim 4, **characterized in that** the data processing device is designed and configured to control or adjust the position of the exposing apparatus in the lining sleeve, in particular even while exposing the branch-off point.

4. Method according to one of the preceding claims, **characterized in that**
the exposing device of the exposing apparatus is arranged at a movable end of a robot arm which can move in at least two, in particular three, spatial axes, can be folded up, in particular, and/or comprises at least one telescopic arm element.

5. Method according to one of the preceding claims, also comprising the following steps, in particular before step b):
j) manually or automatically exposing a portion of the branch-off point, in particular at a distance from the edge of the branch-off point, preferably in the region of the centre of the branch-off point, by means of an exposing device; and
k) manually or automatically exposing an elongated section starting from the first exposed portion in the direction of an inner wall of the branch-off point, in particular in the downward direction.

6. Method according to one of the preceding claims, also comprising the following steps, in particular before step a):
l) detecting a position of a branch-off point before pulling a lining sleeve into the line to be rehabilitated, in particular by means of a measurement apparatus, and storing the position in the data processing device, or
m) inputting the position of a branch-off point to the data processing device, and
n) subsequently manually or automatically moving the exposing apparatus to the position of the branch-off point stored in the data processing device.

7. Method according to one of the preceding claims, **characterized in that**
the automated exposing is carried out in sections, and the length of the sections can be set by the user, preferably in the form of sections that are in the form of segments of a circle, wherein the subsequent section is manually released after each of the sections, in particular.

8. Method according to one of the preceding claims, **characterized in that**
the automated exposing can be carried out in a manner superimposed with manual inputs by the user for controlling the exposing apparatus by means of the input device, with the result that manual exposing is carried out in sections, wherein, after the manual intervention has been completed, the exposing is automatically continued along the predefined geometrical shape.

## Revendications

1. Procédé permettant de dégager automatiquement une branche d'un système de canalisations rénovée à l'aide d'un tube de chemisage, comprenant les étapes suivantes, en particulier dans cet ordre, consistant à :
a) fournir un dispositif de dégagement comprenant un équipement de traitement de données dans la canalisation rénovée, et disposer le dispositif de dégagement en amont de la branche à dégager ;
b) entrer une forme géométrique à dégager, au moyen d'un équipement d'entrée ;
c) dégager la branche au moyen d'un fraisage automatique, commandé par l'équipement de traitement de données, de tronçons du tube de chemisage le long de la forme géométrique entrée par un équipement de dégagement du dispositif de dégagement,
comprenant en outre les étapes suivantes, en particulier en parallèle ou consécutivement à l'étape b), consistant à :
d) entrer la forme géométrique en sélectionnant la forme géométrique parmi un ensemble de formes de figures géométriques, stocké dans l'équipement de traitement de données, comprenant en particulier des cercles, des ellipses, des rectangles et/ou des polygones, ou
e) dessiner à main levée la forme géométrique et introduire ladite forme dans l'équipement de traitement de données au moyen d'un équipement d'acquisition d'image, en particulier d'un scanner ou d'un équipement de caméra, ou
f) dessiner à main levée la forme géométrique au moyen de l'équipement d'entrée, en particulier au moyen d'un pavé tactile ou d'une souris, dans lequel
en particulier au moins l'un des paramètres peut être ou est sélectionné dans un groupe de paramètres comprenant une longueur, une largeur, une hauteur et un diamètre de la forme géométrique,
comprenant en outre les étapes suivantes, en particulier en parallèle ou consécutivement à l'étape b), consistant à :
g) entrer une position de la forme géométrique au moyen de l'équipement d'entrée par rapport à la paroi intérieure du tube de chemisage, en particulier une position angulaire de la forme géométrique par rapport à un centre du rayon du tube de chemisage et/ou une distance par rapport au point le plus bas du tube de chemisage, et/ou
h) acquérir la position de l'extrémité libre de l'équipement de dégagement, et disposer automatiquement la forme géométrique en commençant à la position acquise de l'extrémité libre de l'équipement de dégagement, et
i) en option par la suite pivoter, tourner, incliner et/ou décaler la forme géométrique au moyen de l'équipement d'entrée.

2. Procédé selon l'une quelconque des revendications précédentes, **caractérisé en ce que**
le dispositif de dégagement est réalisé sous la forme d'un robot mobile doté d'un mécanisme de roulement et comprend en particulier un équipement d'entraînement et/ou peut être déplacé au moyen d'un câble, en particulier d'un câble comprenant des fibres de Kevlar et/ou au moyen d'un câble de traction, et/ou d'un câble de traction et d'un équipement d'entraînement externe relié au câble et/ou au câble de traction.

3. Procédé selon la revendication 4, **caractérisé en ce que**
l'équipement de traitement de données est conçu et configuré pour commander ou réguler la position du dispositif de dégagement dans le tube de chemisage, en particulier aussi pendant le dégagement de la branche.

4. Procédé selon l'une quelconque des revendications précédentes, **caractérisé en ce que**
l'équipement de dégagement du dispositif de dégagement est disposé à une extrémité mobile d'un bras de robot mobile sur au moins deux, en particulier trois, axes dans l'espace et qui est en particulier escamotable et/ou comprend au moins un élément de bras télescopique.

5. Procédé selon l'une quelconque des revendications précédentes, comprenant en outre les étapes suivantes, en particulier avant l'étape b), consistant à :
j) dégager manuellement ou automatiquement une section de la branche, en particulier à distance du bord de la branche, de préférence au niveau du centre de la branche, au moyen d'un équipement de dégagement ; et
k) dégager manuellement ou automatiquement un tronçon allongé en commençant par la première section dégagée en direction d'une paroi intérieure de la branche, en particulier en se dirigeant vers le bas.

6. Procédé selon l'une quelconque des revendications précédentes, comprenant en outre les étapes suivantes, en particulier avant l'étape a), consistant à :
l) acquérir une position d'une branche avec de rétracter un tube de chemisage dans la canalisation à rénover, en particulier au moyen d'un dispositif de mesure, et stocker la position dans l'équipement de traitement de données, ou
m) entrer la position d'une branche dans l'équipement de traitement de données, et
n) ensuite, déplacer manuellement ou automatiquement le dispositif de dégagement jusqu'à la position de la branche stockée dans l'équipement de traitement de données.

7. Procédé selon l'une quelconque des revendications précédentes, **caractérisé en ce que**
le dégagement automatique est effectué par tronçons, et la longueur des tronçons est réglable par l'utilisateur, de préférence sous la forme de tronçons en forme de segment de cercle, dans lequel, en particulier après chacun des tronçons, un dégagement manuel du tronçon suivant est effectué.

8. Procédé selon l'une quelconque des revendications précédentes, **caractérisé en ce que**
le dégagement automatisé d'entrées manuelles de l'utilisateur pour la commande du dispositif de dégagement peut être effectué en superposition au moyen de l'équipement d'entrée de sorte qu'un dégagement manuel est effectué par tronçon, dans lequel, à la fin de l'intervention manuelle, le dégagement continue automatiquement le long de la forme géométrique prédéfinie.
